# EUROPEAN PATENT SPECIFICATION

(11) **EP 0 254 528 B1**
(45) Date of publication and mention of the grant of the patent: **13.01.1993**
(21) Application number: 87306433.1
(22) Date of filing: 20.07.1987
(51) Int. Cl.: G11B 27/00, G11B 27/10, G11B 27/34, G11B 21/08, H04N 5/783

(54) **Still image reproduction apparatus**
Stehbild-Wiedergabegerät
Appareil de reproduction d'image fixe

(30) Priority: 25.07.1986 JP 174904/86
(43) Date of publication of application: 27.01.1988
(73) Proprietor: SONY CORPORATION, Tokyo 141 (JP)
(72) Inventor: Kajiura, Minoru c/o Patent Division, Shinagawa-ku Tokyo 141 (JP)
(74) Representative: Pilch, Adam John Michael

(56) References cited:
- EP-A- 0 064 395
- EP-A- 0 188 162
- DE-A- 3 414 597
- FR-A- 2 456 363
- FR-A- 2 544 536
- US-A- 3 814 441
- US-A- 4 139 872
- WIRELESS WORLD vol. 89, no. 1574, November 1983, Haywards Heath GB page 44 - 48; Barker: "Video disc programming for interactive video"
- PATENT ABSTRACTS OF JAPAN vol. 8, no. 72 (P-265)(1509) 04 April 1984, & JP-A-58 218076

## Description

This invention relates to still image reproduction apparatus, such as apparatus for reproducing a still image recorded on a disc.

In previously-proposed electronic image reproducing equipment such as still picture video disc reproduction apparatus and its editing apparatus, a desk top input device for allowing an operator to designate a specific mode has been arranged separately from the main equipment. The operator activates the input device, for example by depressing an up or down switch arranged on an operation panel of the operation input device, or by means of keys entering a track number of a recording track for a desired still image. Thereafter, a still image signal recorded in the designated recording track on the video disc is reproduced or can be edited.

In electronic equipment of the type described above, if the operator can designate an operation mode for successively switching a plurality of still images at a desired timing so as to successively display the still images (this mode being referred to as a successive reproduction mode), the operator can conveniently and successively observe the images for reproduction or editing, as if the operator were turning the pages of a book.

In practice, the successive reproduction mode can be utilised in the following cases. First, after one still image has been observed for a relatively long period of time, this still image is then switched to another still image. Alternatively, the still images are initially switched at short intervals of time and the switching rate is gradually decreased in order to search for a desired still image.

If the operator can selectively change the image switching rate, the number of images subjected to switching can be counted approximately, thus providing a convenient operation input device.

Such an operation element may be exemplified by a so-called jog dial used to control the feed rate of the images in accordance with the rotational speed of the dial in a video tape recorder or the like. This type of rotary operation element may be used in a still video reproduction apparatus.

European Patent Application No EP-A-0 188 162 discloses a video tape recorder having a jog dial as described above.

However, in still image reproduction apparatus, when the images are switched at high speed, the display time per image is shortened and the next image may be displayed before the operator has identified the previous still image.

Unlike moving picture images, two adjacent still images will not often have any correlation between them. In this case, it is very difficult for the operator to visually recognise each still image within a very short display time such as would be provided by the above-described technique.

According to the invention there is provided apparatus having a reproduction head and display means for visually reproducing still images recorded in separate tracks on a recording medium which are scanned by the reproduction head, the apparatus comprising:
input means including an operator controllable movable member for generating pulse signals on the basis of the direction and amount of movement of the movable member;
characterised by:
a track data generating circuit responsive to the pulse signals for sequentially generating track data representing the track number of each track on the recording medium; and
head drive and control means for stepping the reproduction head to a destination recording track indicated by said track number, said stepping being inhibited for a predetermined first time interval after said reproduction head has arrived at the destination track and a still image is to be displayed, said track number having been incremented by said pulse signals generated during a combined time interval which is the sum of a second time interval required for the last movement of said reproduction head plus said first time interval so that the still image of a recording track is displayed for a period of at least the first time interval and then a still image is displayed from a subsequent recording track spaced apart from the initial recording track by a number of recording tracks corresponding to the extent of incremental change in the track number during the combined time interval.

A preferred embodiment of the invention, to be described in greater detail hereinafter, provides a still image reproduction apparatus wherein still images can be switched according to an operator selectable display time, so that the operator can visually recognise the displayed still images in spite of frequent switching of the still images.

In a still image reproduction apparatus according to the preferred embodiment, a still image of a first predetermined recording track is displayed for a period exceeding a predetermined time interval and then a still image from a second predetermined recording track spaced apart from the first recording track by a number of recording tracks corresponding to the physical position of an operator controlled input dial is displayed. Therefore, even if the still images are switched and displayed at high speed in a successive reproduction mode, an operator can visually identify the still images.

A still image reproduction apparatus embodying the invention is accordingly provided in which still images recorded on tracks on a disc are visually reproduced for a predetermined minimum time interval, selection of the tracks depending on the direction and amount of rotation of an operator adjustable dial, so that the operator can visually identify the still image displayed on a monitor even when the dial is rotated rapidly for quick switching of the still images in a sequential reproduction mode.

After a still image of a predetermined recording track has been displayed for a period exceeding the predetermined time interval, the recording tracks are skipped by a number corresponding to the amount of movement of the dial to display the still image of the next recording track. Even if the dial is moved at a high speed, the operator can visually identify the still image of the recording track for a period exceeding the minimum time interval. As a result, the operator can readily recognise the contents of the still image.

The invention will now be described by way of example with reference to the accompanying drawings, in which:
Figure 1 is a block diagram showing a still video reproduction apparatus according to an embodiment of the present invention;
Figure 2 is a sectional view showing a positional relationship between the code plate and the photointerrupters shown in Figure 1;
Figures 3A to 3C and 4A to 4C are timing charts for explaining the operation of the still video reproduction apparatus shown in Figure 1;
Figure 5 is a table for explaining the operation of a part of the still video reproduction apparatus shown in Figure 1;
Figure 6 is a flow chart for explaining the operation of the still video reproduction apparatus shown in Figure 1;
Figures 7A to 7E, 8A to 8E and 9A to 9E are timing charts for explaining the manner in which the operation of the apparatus depends on the rotational speed of the rotary dial; and
Figure 10 shows a video disc format.

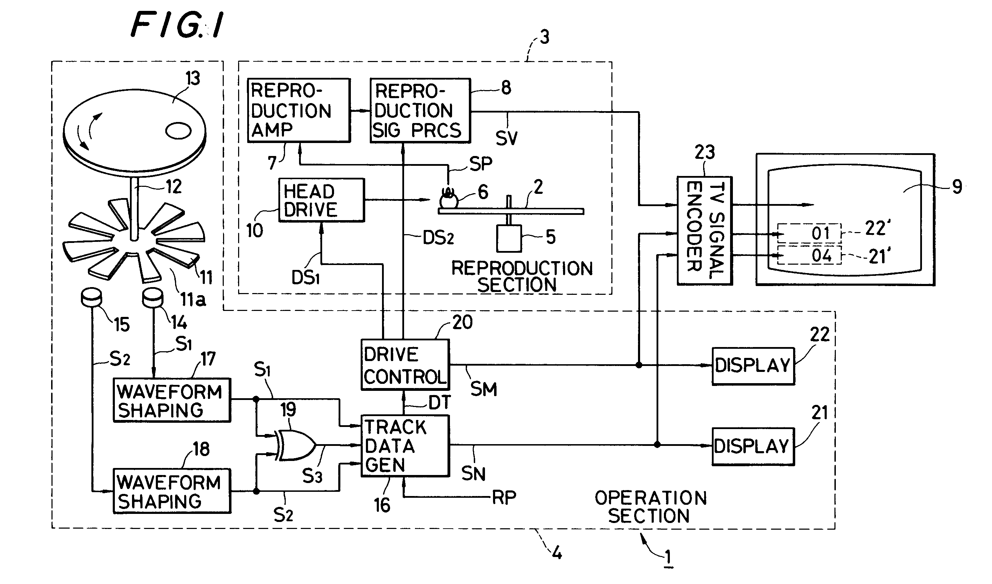

Referring to Figure 1, a still video reproduction apparatus 1 using a magnetic disc 2 comprises a reproduction device 3 and an operation input device 4.

In the reproduction device 3, a reproduction output signal SP obtained from a magnetic head 6 is received by a reproduction output means constituted by a reproduction amplifier 7, a reproduction signal processor 8, and a monitor 9, while the magnetic disc 2 is rotated by a motor 5.

The reproduction signal processor 8 receives the amplified reproduction output signal SP by means of the reproduction amplifier 7 and selectively causes the monitor 9 to display one at a time a number of, for example 50, still images recorded on a corresponding number of recording tracks on the magnetic disc 2. The output signal SP is supplied through a TV signal encoder 23 to the monitor 9.

A head drive circuit 10 co-operates with a system drive controller 20 including a microcomputer and included in the operation input device 4 to constitute a drive control means for the magnetic head 6. The drive control means shifts the position of the magnetic head 6 in response to a control signal DS1 output from the operation input device 4, thereby obtaining a reproduction output signal SP from a desired recording track.

When a control signal DS2 output from the operation input device 4 is set at a low logic level "L", the reproduction signal processor 8, which includes a muting circuit, interrupts processing of the reproduction output signal SP supplied from the magnetic head 6. As a result, the display on the monitor 9 is interrupted.

A disc-like code plate 11 having slits 11a in its edge, and a rotary dial 13 are mounted in common on a shaft 12 which is rotatably mounted with respect to an operation panel (not shown) in the operation input device 4 so that the dial 13 is accessible to the user for rotation of the code plate 11.

The rotational torque resistance of the rotary dial 13 is changed by a detent mechanism (not shown) depending on the angular position thereof. That is, when the rotary dial 13 is rotated, the operator will feel a click corresponding to each of the slits 11a in the code plate 11.

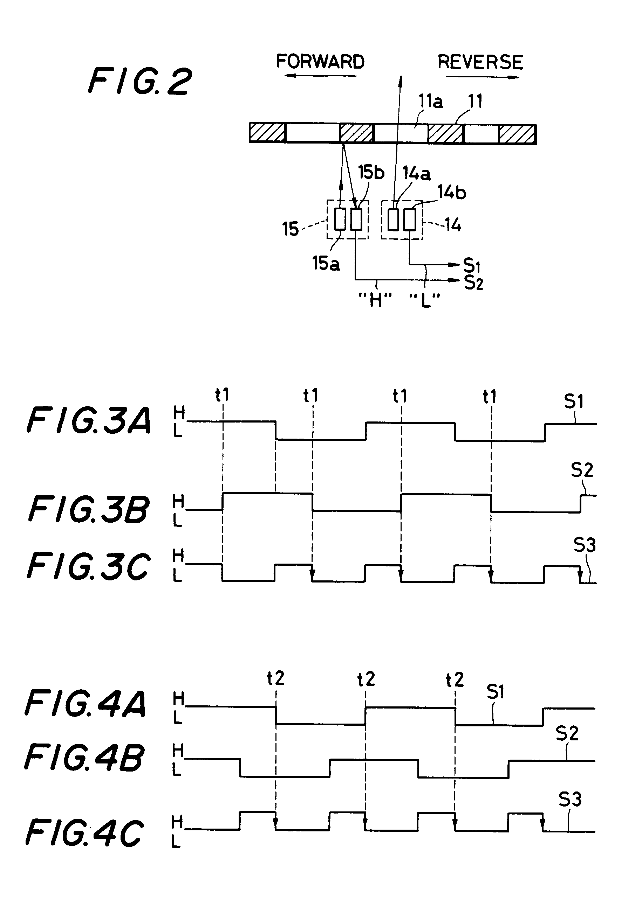

Angular position detection elements, for example photointerrupters 14 and 15, are arranged below the code plate 11 to detect the angular position or movement of the code plate 11. As shown in more detail in Figure 2, the photointerrupters 14 and 15 comprise respective light-emitting elements 14a and 15a and respective light-receiving elements 14b and 15b for detecting beams reflected by the code plate 11, and are aligned along the circumferential direction of the code plate 11.

The logic levels of signals S1 and S2 output from the photointerrupters 14 and 15 are changed depending on the rotational direction and the rotational speed of the code plate 11. When slits 11a are located above the photointerrupters 14 and 15, their output signals are set at the low logic level "L", otherwise they are set at a high logic level "H".

The signals S1 and S2 are supplied to separate respective wave shapers 17 and 18. A track data generator 16 receives the signals S1 and S2 from the wave shapers 17 and 18, and an EX-OR output signal S3 generated from the input signals S1 and S2 combined in an exclusive OR gate 19.

The track data generator 16 determines on the basis of the input signals S1 to S3 whether the rotary dial 13 is being rotated clockwise (referred to as a forward direction hereinafter) or anticlockwise (referred to as a reverse direction hereinafter) and generates track data DT representing a track number on the basis of both the direction of rotation and the rotational angle of the rotary dial 13. The track data DT is supplied to the system drive controller 20.

When the rotary dial 13 is rotated in the forward direction, as shown in Figures 3A to 3C, the input signal S1 from the photointerrupter 14 is set first at logic "H" (Figure 3A) and then the input signal S2 is set at logic "H" (Figure 3B). At each fall time t1 (Figure 3C) of the input signal S3, the input signal S2 goes from logic "L" to logic "H" or vice versa.

When the rotary dial 13 is rotated in the reverse direction, as shown in Figures 4A to 4C, the input signal S2 is set first at logic "H" (Figure 4B) and then the input signal S1 is set at logic "H" (Figure 4A). At each fall time t2 (Figure 4C) of the input signal S3, the input signal S1 goes from logic "L" to logic "H" or vice versa.

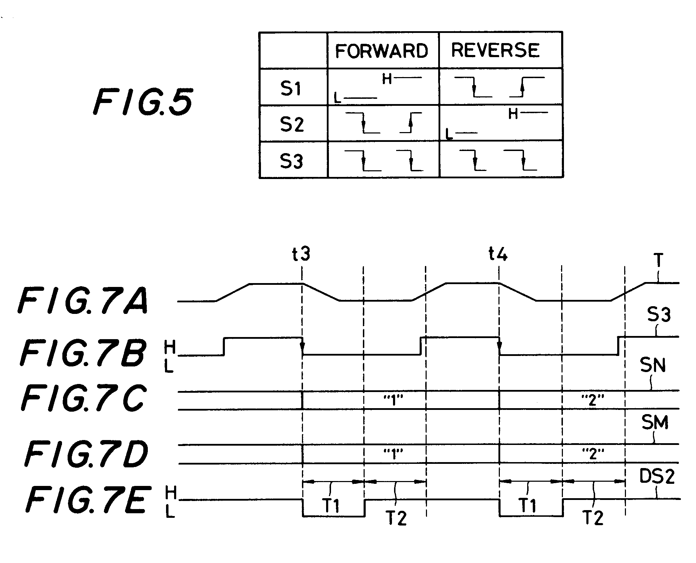

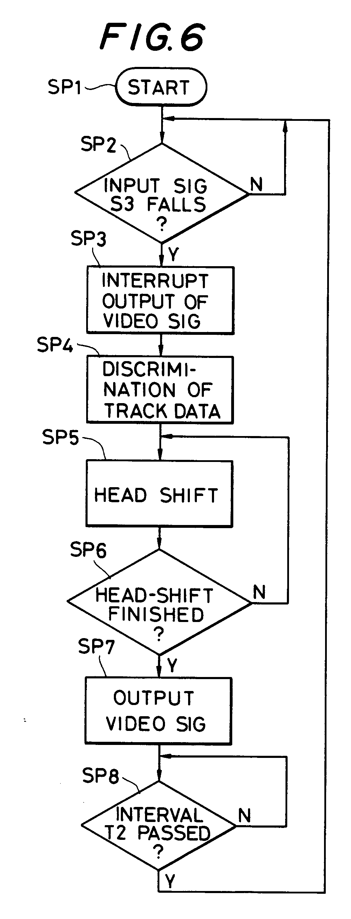

As shown in Figure 5, the change points of the input signals S1 and S2 at the fall times t1 and t2 of the input signal S3 can be detected to indicate the rotational direction of the rotary dial 13.

At the fall time, that is at logic "L" of the input signal S3, the track data generator 16 updates the track number (absolute address), for example by subtracting or adding "1", depending upon the rotational direction of the rotary dial 13, to the number of the recording track which is being scanned by the magnetic head 6.

At the same time, the track data generator 16 sends a signal SN to a display 21 to display the track data DT represented by the output signal SN. It should be noted that the head 6 is generally set at the outermost track (track no. 0) upon insertion of the magnetic disc 2 into the reproduction device 3, and that at the same time, a reset pulse RP is input to the track data generator 16 to reset the track number count to zero.

Using the rotary dial 13 as the operation input element and the pulse signals S1, S2 and S3 obtained from the rotary operation input element through the rotational amount detector comprising the exclusive OR gate 19, the wave shapers 17 and 18, and the photointerrupters 14 and 15, the track data generator 16 is operable to generate track data DT which is then displayed on the operation panel. The drive controller provides a signal SM to a display 22 as will be described below.

The drive controller 20 comprises a microcomputer including a CPU (central processing unit) and arranged to execute a program as shown in Figure 6. The CPU starts at a step SP1 and determines in a step SP2 whether the input signal S3 is falling. If the answer is NO in the step SP2, the operation in the step SP2 is repeated.

However, if the input signal S3 falls and the track data DT is input, the CPU determines the answer to be YES in the step SP2. The CPU then advances to a step SP3. The control signal DS2 goes to the logic "L" to prevent a disturbed image from being displayed on the monitor 9 while the magnetic head 6 is shifted to a predetermined recording track.

The CPU then determines a track number represented by the track data DT in a step SP4. The track number is displayed on the display 21 in the operation panel.

In a step SP5, the control signal DS1 is output to move the magnetic head 6 to a recording track whose track number has been determined in the step SP4. The CPU advances to a step SP6, and determines whether shifting of the magnetic head 6 has been finished.

If the answer is NO in the step SP6, the CPU returns to the step SP5. The loop of the steps SP5, SP6, and SP5 is repeated. When the magnetic head 6 is determined to have been completely shifted, the CPU determines the answer to be YES in the step SP6. The CPU then advances to a step SP7.

In the step SP7, the drive controller 20 causes the control signal DS2 to be logic "H". A still image recorded on the recording track whose track number is represented by the track data DT is displayed on the monitor 9 on the basis of the reproduction output signal SP supplied from the magnetic head 6.

Subsequently, a display interval of the still image displayed on the monitor 9 is counted in a step SP8. The CPU determines whether the display interval has passed a predetermined interval T2. The interval T2 may be set to be, for example 0.2 sec, which allows the operator to visually recognise the still image. Even if the still images are changed frequently, this period of time will allow the operator to visually recognise the still images.

However, if the answer is NO in the step SP8, the operation in the step SP8 is repeated. If the display interval reaches the predetermined interval T2, the CPU determines the answer to be YES in the step SP8. The CPU returns to the step SP2 in which the CPU waits for detection of the fall time of the input signal S3.

The drive controller 20 ignores the track data DT output from the track data generator 16 and executes the program shown in Figure 6 for the interval T2 for displaying the still image after the input signal S3 falls and the magnetic head 6 starts moving.

The track data generator 16 sends track data DT representing the rotational direction of the rotary dial 13 every time the input signal S3 falls regardless of whether the drive controller 20 responds to the track data DT or not. At the same time, the track data generator 16 updates the track number displayed on the display 21.

As shown in Figures 7A to 7E, when the rotary dial 13 is turned relatively slowly so as to cause the input signal S3 to fall after the magnetic head 6 has been completely moved within the interval T1 and the predetermined time interval T2 has elapsed, the drive controller 20 sets the control signal DS2 (Figure 7E) to be logic "L" a fall time t3 (Figure 7B) of the input signal S3 at which the logic level is changed in sychronism with a change in the rotational torque T (Figure 7A) of the rotary dial 13. Display on the monitor 9 is interrupted, and the drive controller 20 waits for the magnetic head 6 to move. In this case, the signal SN and the signal SM (Figures 7C and 7D) which are supplied to the displays 21 and 22 represent the track number (for example "1") of the destination recording track.

When the shift of the magnetic head 6 has been completed, the control signal DS2 goes to logic "H" (Figure 7E). As a result, the still image recorded in the recording track represented by the track data DT is displayed on the monitor 9. When the display time reaches the interval T2, the drive controller 20 returns to the step SP2. At the fall time t4 of the next input signal S3, the drive controller 20 moves the magnetic head 6 to the recording track of the next track number (for example "2").

Every time the input signal S3 falls upon operation of the rotary dial 13, the still image in the recording track having the track number displayed on the display 21 is displayed on the monitor 9. At the same time, the track number of this recording track is displayed on the display 22 or in a display area 22' on the monitor 9 by the output signal SM of the drive controller 20.

The number of clicks arising from rotation of the dial 13, that is the number of detected slits 11a or the track number of the recording track to which the head does not access, is displayed on the display 21 or in a display area 21' on the monitor 9. The track number of the currently reproduced still image is displayed on the display 22 or in the display area 22'.

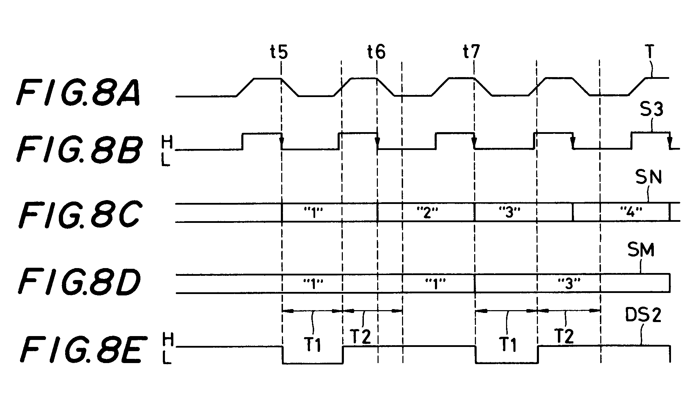

When the operator turns the rotary dial 13 relatively quickly so as to move the magnetic head 6, as shown in Figures 8A to 8E, so that the input signal S3 falls again during the interval T2 (Figures 8A and 8B), and the drive controller 20 outputs the control signal DS2 at a first fall time t5 (Figure 8E) of the input signal S3, the controller 20 causes the magnetic head 6 to start moving. In this case, the track number "1" represented by the signals SN and SM (Figures 8C and 8D) is displayed on the displays 21 and 22.

When the magnetic head 6 has been completely moved, the system controller 20 enables the control signal DS2. In the step SP8, the drive controller 20 starts counting the display time.

Meanwhile, the input signal S3 goes to logic "L" at a time t6. Even if the track data DT is output, the drive controller 20 ignores this track data DT and continues to count the display time.

The track number represented by the signal SN and displayed on the display 21 is updated to the next track number "2". However, the track number "1" of the still image displayed on the monitor remains continuously displayed on the display 22 as a result of the content represented by the signal SM (Figures 8C and 8D).

When the display time reaches the interval T2, the drive controller 20 returns to the step SP2 and waits for the next trailing edge of the input signal S3.

At the next fall time t7 of the input signal S3, the corresponding track data DT represents the track number "3". The drive controller 20 moves the magnetic head 6 from the recording track with the track number "1" to the recording track with the track number "3" (in this case, both the track numbers represented by the signals SN and SM and displayed on the displays 21 and 22 are updated to the track number "3").

Even if the operator turns the rotary dial 13 at a speed corresponding to the timing of the fall of the input signal S3 so as to change the currently displayed still image to the next still image before he has sufficiently identified the contents of the currently displayed still image, the currently displayed still image can be displayed for the display time T2 to allow him to visually identify the contents thereof. Every other still image is sequentially displayed.

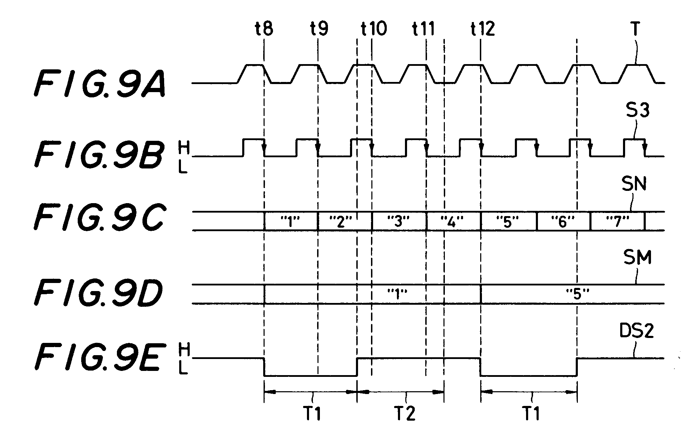

As shown in Figures 9A to 9E (in this case, the time base is longer than that in Figures 7A to 7E and 8A to 8E for illustrative convenience), when the operator turns the rotary dial 13 at a very high speed thereby causing the input signal S3 to fall before the magnetic head 6 has completely moved (Figures 9A and 9B), the drive controller 20 moves the magnetic head 6 to the recording track with the track number "1" at the first fall time t8 of the input signal S3. Therefore, the track number "1" is displayed on the displays 21 and 22 (Figures 9C, 9D, and 9E).

Even if the input signal S3 rises at the next fall time t9, the drive controller 20 repeats the loop of the steps SP5, SP6, and SP5. In this case, the drive controller ignores the track data DT (this data representing the track number "2") output from the track data generator 16.

The content of the display 21 which is represented by the signal SN is updated to the currently updated track number "2" (Figure 9C).

Even if the input signal S3 falls at times t10 and t11, the drive controller 20 does not return to the step SP2 (that is, the display time does not reach the interval T2). Therefore, the drive controller 20 continuously ignores the track data DT representing the track numbers "3" and "4", which is output from the track data generator 16.

When the display time reaches the interval T2 and then the input signal S3 falls at a time t12, the drive controller 20 fetches the track data DT representing the track number "5", which is output from the track data generator 16. The still image recorded in the track having the track number "5" is then displayed.

Even if the operator turns the rotary dial 13 very quickly, each still image can be displayed for a period exceeding the interval T2 to allow the operator to visually identify the content thereof. Therefore, still images can be changed according to the rotational operation of the rotary dial 13 (in this case, every five still images).

With the above arrangement, when the operator turns the rotary dial 13 slowly, the still images can be observed on the monitor 9 one by one at the timings designated by rotation of the rotary dial 13.

When the operator turns the rotary dial 13 at a speed sufficient to cause the input signal S3 to fall at a timing which would not allow the operator to visually identify the contents of the still image, the currently displayed still image is displayed for a period exceeding the interval T2, thereby allowing the operator to visually identify the currently displayed still image. Thereafter, the recording tracks are skipped by a number corresponding to the rotational operation of the rotary dial 13.

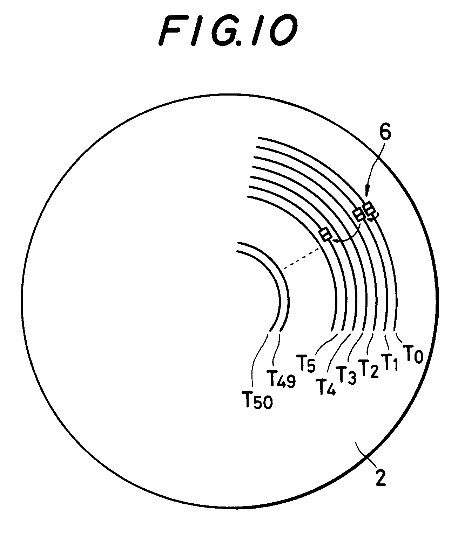

Figure 10 illustrates the movement of the magnetic head 6 during high-speed operation such as that shown in Figure 9. Although the disc 2 is inserted in the reproduction device 3 and the magnetic head 6 is located initially at a position corresponding to a track T0, the magnetic head 6 reproduces the still image in a track T1, then skips over the still images in tracks T1 to T4, and reproduces the still image in the track T5.

With the above arrangement, even if the operator turns the rotary dial 13 at a high speed, the currently displayed still image is continuously displayed for a period exceeding the interval T2 for allowing the operator to visually identify its contents. Thereafter, the still images corresponding to the operation amount of the rotary dial 13 are skipped, and the next still image is displayed. Therefore, there is provided a still video reproduction apparatus in which, even if the operator turns the dial quickly, the operator can visually identify the contents of each still image displayed on the monitor.

In the above embodiment, the interval T2 for allowing the operator to visually identify the contents of the still image is given as 0.2 sec. However, this interval may be changed as required.

Even if continuous still images represent a sequence of motion, the operator can visually identify the images although they are sequentially changed quickly. However, if the contents of the still images represent complicated shapes or the like, it takes a longer period of time for the operator to visually recognise them. In other words, a longer display interval T2 is then required. By taking this case into consideration, the interval T2 may be varied as desired.

In the above embodiment, the display operation of the monitor 9 is interrupted for the interval T1 required for moving the magnetic head 6 so as to prevent the disturbed image from being displayed thereon. However, the still image prior to the movement of the magnetic head 6 may instead be displayed for the interval T1 by using suitable means such as a field memory.

In the above embodiment, the currently displayed still image is changed to the next still image in accordance with the track data DT output upon a lapse of the time interval T2. However, the currently displayed still image may instead be changed into the next still image in the recording track having a track number represented by the track data DT generated just before the lapse of the interval T2 as soon as the interval T2 has elapsed.

In the above embodiment, the photointerrupters are used to detect angular position information of the code plate by light reflected from the code plate. However, an input means for entering the rotational amount is not limited to this type of arrangement, but may be modified in various ways. For example, the rotary dial could be replaced by a slide type control coupled to suitable transducers to produce the output signals S1 and S2.

The above-described embodiment concerns a still video reproduction apparatus having separate reproduction and operation input devices. However, such a still video reproduction apparatus may instead be provided with integral reproduction and operation input devices.

The above-described embodiment concerns a still video reproduction apparatus using a magnetic disc. However, an optical still video reproduction apparatus can instead by provided for producing a still image on the basis of a reproduced signal by an optical reproduction head by using a different storage medium such as an optical disc or a video tape recorder.

As described above, there may readily be provided a still image reproduction apparatus wherein still images are changed according to an operation amount, and the operator can visually identify the still image displayed on the monitor even when instructing quick switching of the still images in a sequential reproduction mode.

## Claims

1. Apparatus having a reproduction head (6) and display means (9) for visually reproducing still images recorded in separate tracks on a recording medium (2) which are scanned by the reproduction head (6), the apparatus comprising:
input means (11 to 15, 17 to 19) including an operator controllable movable member (13) for generating pulse signals (S1 to S3) on the basis of the direction and amount of movement of the movable member (13);
characterised by:
a track data generating circuit (16) responsive to the pulse signals (S1 to S3) for sequentially generating track data (DT) representing the track number of each track on the recording medium (2); and
head drive and control means (10, 20) for stepping the reproduction head (6) to a destination recording track indicated by said track number, said stepping being inhibited for a predetermined first time interval (T2) after said reproduction head (6) has arrived at the destination track and a still image is to be displayed, said track number having been incremented by said pulse signals (S1 to S3) generated during a combined time interval (T1 and T2) which is the sum of a second time interval (T1) required for the last movement of said reproduction head (6) plus said first time interval (T2) so that the still image of a recording track is displayed for a period of at least the first time interval (T2) and then a still image is displayed from a subsequent recording track spaced apart from the initial recording track by a number of recording tracks corresponding to the extent of incremental change in the track number during the combined time interval (T1 and T2).

2. Apparatus according to claim 1, wherein said head drive and control means (10, 20) comprises control signal generating means (20) for generating a head shift pulse (DS1) in response to said track data (DT), and head drive means (10) for step-by-step movement of said reproduction head (6) to a recording track in response to said head shift pulse (DS1), said apparatus including reproduction output means (7, 8, 9, 23) for reproducing and displaying the still image from the recording track scanned by said reproduction head (6) on the basis of an output signal (SP) from said reproduction head (6).

3. Apparatus according to claim 2, wherein said reproduction output means includes a muting circuit (8) for muting said output signal (SP) during the head driving interval in response to a muting control signal (DS2), and said control signal generating means (20) is operable to generate said muting control signal (DS2) as a function of said track data (DT) and the head driving interval.

4. Apparatus according to claim 1, claim 2 or claim 3, including a visual display (21; 21') of the track number (SN) of the still image being produced.

5. Apparatus according to any one of the preceding claims, including a visual display (22; 22') of the track number (SM) of the still image to be reproduced as selected by the operator using the movable member (13).

6. Apparatus according to claim 4 or claim 5, comprising a TV monitor (9) having a screen for displaying the reproduced still image and wherein the track number display is superimposed on the monitor screen.

7. Apparatus according to any one of the preceding claims, wherein said movable member is a rotary dial (13), and wherein the phasing of said pulse signals (S1 to S3) is indicative of the direction of rotation of said dial (13) and the number of said pulse signals (S1 to S3) is indicative of the amount of rotation of said dial (13).

8. Apparatus according to claim 7, wherein said dial (13) includes detent means for imparting a physical resistance to the rotation of the dial (13) in increments corresponding to the separate tracks.

9. Apparatus according to any one of the preceding claims, wherein the recording medium comprises a disc (2).

## Patentansprüche

1. Vorrichtung mit einem Wiedergabekopf (6) und Anzeigemittel (9) zur optischen Wiedergabe von Einzelbildern, die auf getrennten Spuren eines Aufnahmemediums (2) aufgezeichnet sind, das durch den Wiedergabekopf (6) abgetastet wird, wobei die Vorrichtung Eingabemittel (11 bis 15 , 17 bis 19) aufweist, welche ein von einer Bedienungsperson steuerbares bewegliches Teil (13) zum Erzeugen von Impulssignalen (S1 bis S3) auf der Grundlage der Richtung und des Betrags der Bewegung des beweglichen Teils (13) enthalten, gekennzeichnet durch
eine Schaltung (16) zur Erzeugung von Spurdaten in Abhängigkeit von den Impulssignalen (S1 bis S2) zum aufeinanderfolgenden Erzeugen von Spurdaten (DT), welche der Spurnummer der einzelnen Spur auf dem Aufnahmemedium entsprechen, und
Kopfantriebs- und Steuermittel (10, 20) zum schrittweisen Bewegen des Wiedergabekopfs (6) auf eine vorbestimmte durch die Spurdaten (DT) gekennzeichnete Aufnahmespur, wobei die genannte schrittweise Bewegung für ein vorbestimmtes erstes Zeitintervall (T2) verhindert wird, nachdem der genannte Wiedergabekopf (6) die Zielspur erreicht hat und ein Einzelbild angezeigt wird, wobei die genannte Spurnummer durch die genannten Impulssignale (S1 bis S3) inkrementiert worden ist, die während eines verbundenen Zeitintervalls (T1 und T2) erzeugt wurden, welches die Summe aus einem zweiten Zeitintervall (T1), das für die letzte Bewegung des genannten Wiedergabekopfs (6) erforderlich ist, und dem genannten ersten Zeitintervall (T2) ist, so daß das Einzelbild einer Aufnabmespur für einen Zeitraum von zumindest dem ersten Zeitintervall (T2) angezeigt wird, und daß dann ein Einzelbild einer darauf folgenden Aufnahmespur angezeigt wird, wobei diese Aufnahmespur von der ursprünglichen Aufnahmespur durch eine Anzahl von Aufnahmespuren räumlich getrennt ist, welche der Größe der Änderung des Inkrements für die Spurnummer während des verbundenen Zeitintervalls (T1 und T2) entspricht.

2. Vorrichtung nach Anspruch 1, bei der die genannten Kopfantriebs- und Steuermittel (10, 20) Mittel (20) zum Erzeugen eines Steuersignals zum Erzeugen eines Kopf-Verschiebeimpuls (DS1) in Abhängigkeit der genannten Spurdaten (DT), und Kopfantriebsmittel (10) für eine schrittweise Bewegung des genannten Wiedergabekopfs (6) zu einer Aufnahmespur in Abhängigkeit der genannten Kopf-Verschiebeimpulse (DS1) aufweisen, wobei die Vorrichtung Wiedergabe-Ausgabemittel (7, 8, 9, 23) enthält, zur Wiedergabe und Anzeige des Einzelbildes, das von der Aufnahmespur durch den genannten Wiedergabekopf (6) abgetastet wird, auf der Grundlage eines Ausgangssignals (SP) des genannten Wiedergabekopfs (6).

3. Vorrichtung nach Anspruch 2, bei der die genannten Wiedergabe-Ausgabemittel eine Unterbrechungsschaltung (8) zur Unterbrechung des genannten Ausgangssignal (SP) während des Zeitintervalls, in dem der Kopf angetrieben wird, in Abhängigkeit eines Unterbrechungssteuersignals (DS2) aufweisen, und bei der die genannten Mittel (20) zur Erzeugung von Steuersignalen geeignet sind, das genannte Unterbrechungssteuersignal (DS2) als eine Funktion der genannten Spurdaten (DT) und des Intervalls, in dem der Kopf angetrieben wird, zu erzeugen.

4. Vorrichtung nach einem der Ansprüche 1 bis 3, die eine optische Anzeige (21; 21') der Spurnummer (SN) des gerade erzeugten Einzelbildes aufweist.

5. Vorrichtung nach einem der vorhergehenden Ansprüche, die eine optische Anzeige (22; 22') der Spurnummer (SM) des Einzelbildes aufweist, das auf Grund einer Auswahl der Bedienungsperson mittels des beweglichen Teils (13) erzeugt werden soll.

6. Vorrichtung nach Anspruch 4 oder 5, die einen TV-Monitor (9) aufweist, welcher einen Bildschirm für das wiedergegebene Einzelbild besitzt, und bei dem die Anzeige der Spurnummer auf dem Monitor-Bildschirm überlagert ist.

7. Vorrichtung nach einem der vorhergehenden Ansprüche, bei der das bewegliche Teil eine rotierende Lochscheibe (13) ist, und bei der die Phaseneinstellung der genannten Impulssignale (S1 bis S3) die Drehrichtung der genannten Lochscheibe (13) anzeigt, und die Anzahl der genannten Impulssignale (S1 bis S3) die Umdrehungsgeschwindigkeit der genannten Lochscheibe (13) anzeigt.

8. Vorrichtung nach Anspruch 7, in welcher die genannte Lochscheibe (13) Sperrmittel aufweist, zum Aufbringen eines physikalischen Widerstands entgegen die Rotation der Lochscheibe (13) in Inkrementen, welche den getrennten Spuren entsprechen.

9. Vorrichtung nach einem der vorhergehenden Ansprüche, bei der das Aufnahmemedium eine Disc (2) enthält.

## Revendications

1. Appareil ayant une tête (6) de reproduction et un dispositif d'affichage (9) destiné à reproduire visuellement des images fixes enregistrées dans les pistes séparées sur un support d'enregistrement (2) qui sont balayées par la tête de reproduction (6), l'appareil comprenant :
un dispositif de saisie (11 à 15, 17 à 19) comprenant un organe mobile (13) qui peut être commandé par un opérateur et qui est destiné à créer des signaux pulsés (S1 à S3) en fonction du sens et de l'amplitude de déplacement de l'organe mobile (13),
caractérisé par
un circuit (16) générateur de données de piste commandé par les signaux pulsés (S1 à S3) et destiné à créer séquentiellement des données de piste (DT) qui représentent le numéro de piste de chaque piste sur le support d'enregistrement (2), et
un dispositif (10, 20) de commande et de pilotage de tête destiné à provoquer un déplacement de la tête de reproduction (6) vers une piste de destination indiquée par le numéro de piste, le déplacement étant empêché pendant un premier intervalle prédéterminé de temps (T2) après que la tête de reproduction (6) a atteint la piste de destination et une image fixe doit être affichée, le numéro de piste ayant progressé sous l'action des signaux pulsés (S1 à S3) créés pendant un intervalle combiné de temps (T1 et T2) qui est la somme d'un second intervalle de temps (T1) nécessaire au dernier déplacement de la tête de reproduction (6) augmentée du premier intervalle de temps (T2), si bien que l'image fixe d'une piste d'enregistrement est affichée pendant une période au moins égale au premier intervalle de temps (T2), et une image fixe est affichée pour une piste suivante d'enregistrement séparée de la piste initiale d'enregistrement par un nombre de pistes d'enregistrement correspondant à l'amplitude du changement élémentaire de numéro de piste pendant l'intervalle combiné de temps (T1 et T2).

2. Appareil selon la revendication 1, dans lequel le dispositif (10, 20) de commande et de pilotage de tête comporte un dispositif (20) générateur de signaux de commande destiné à créer un signal (DS1) de déplacement de tête en fonction des données de piste (DT), et un dispositif (10) de pilotage de tête destiné à provoquer un déplacement discontinu de la tête de reproduction (6) vers une piste d'enregistrement en fonction de l'impulsion (DS1) de déplacement de tête, l'appareil comprenant un dispositif (16, 8, 9, 23) de sortie de reproduction destiné à reproduire et afficher l'image fixe de la piste d'enregistrement balayée par la tête de reproduction (6) en fonction d'un signal de sortie (SP) de la tête de reproduction (6).

3. Appareil selon la revendication 2, dans lequel le dispositif de sortie de reproduction comprend un circuit (8) destiné à supprimer le signal de sortie (SP) pendant l'intervalle de pilotage de tête sous la commande d'un signal de commande de silence (DS2), et le dispositif (20) générateur du signal de commande est destiné à créer le signal de commande de silence (DS2) en fonction des données de piste (DT) et de l'intervalle de pilotage de tête.

4. Appareil selon la revendication 1, 2 ou 3, comprenant un dispositif d'affichage visuel (21 ; 21') du numéro de piste (SN) de l'image fixe reproduite.

5. Appareil selon l'une quelconque des revendications précédentes, comprenant un dispositif d'affichage visuel (22 ; 22') du numéro de piste (SM) de l'image fixe qui doit être reproduite, sélectionné par l'opérateur avec l'organe mobile (13).

6. Appareil selon la revendication 4 ou 5, comprenant un moniteur de télévision (9) ayant un écran d'affichage de l'image fixe reproduite, et dans lequel le dispositif d'affichage du numéro de piste est superposé à l'écran du moniteur.

7. Appareil selon l'une quelconque des revendications précédentes, dans lequel l'organe mobile est un cadran rotatif (13), et dans lequel le déphasage des signaux pulsés (S1 à S3) est représentatif du sens de rotation du cadran (13), et le nombre des signaux pulsés (S1 à S3) est représentatif de l'amplitude de la rotation du cadran (13).

8. Appareil selon la revendication 7, dans lequel le cadran (13) comporte un dispositif d'encliquetage destiné à créer une résistance physique opposée à la rotation du cadran (13) par pas élémentaires correspondant aux pistes séparées.

9. Appareil selon l'une quelconque des revendications précédentes, dans lequel le support d'enregistrement est un disque (2).
